**Europäisches Patentamt**

**European Patent Office**

**Office européen des brevets**

(19)

(11) **EP 1 376 961 A1**

(12) **EUROPÄISCHE PATENTANMELDUNG**

(43) Veröffentlichungstag:
02.01.2004 Patentblatt 2004/01

(51) Int Cl.⁷: **H04L 25/02**, H04B 7/08

(21) Anmeldenummer: 02014373.1

(22) Anmeldetag: **27.06.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **SIEMENS AKTIENGESELLSCHAFT**
80333 München (DE)

(72) Erfinder:
• **Frey, Thomas, Dr.**
89081 Ulm (DE)

• **Grundler, Thomas**
81377 München (DE)
• **Kiessling, Mario**
89075 Ulm (DE)
• **Reinhardt, Markus, Dr.**
89231 Neu-Ulm (DE)
• **Seeger, Alexander, Dr.**
85622 Feldkirchen (DE)
• **Viering, Ingo**
89075 Ulm (DE)

(54) **Verfahren zur Ermittlung von Nutzsignalparametern und Störsignalparametern aus einem Empfangssignal eines Funkkommunikationssystems**

(57) Die Erfindung betrifft ein Verfahren zur Ermittlung von Nutzsignalparametern und Störsignalparametern aus einem Empfangssignal eines Funkkommunikationssystems, bei dem aus dem Empfangssignal einerseits anhand einer kohärenten Kurzzeitmittelung und einer inkohärenten Langzeitmittelung Nutzsignalparameter und andererseits anhand einer inkohärenten Langzeitmittelung Störsignalparameter durch Schätzung gewonnen werden. Aus den geschätzten Nutzsignalparametern und aus den geschätzten Störsignalparametern werden optimierte Nutzsignalparameter und optimierte Störsignalparameter mit jeweils kompensiertem Schätzfehler gewonnen.

EP 1 376 961 A1

**Beschreibung**

Die Erfindung betrifft ein Verfahren zur Ermittlung von Nutzsignalparametern und Störsignalparametern aus einem Empfangssignal eines Funkkommunikationssystems, bei dem aus dem Empfangssignal einerseits anhand einer kohärenten Kurzzeitmittelung und einer inkohärenten Langzeitmittelung geschätzte Nutzsignalparameter und andererseits anhand einer inkohärenten Langzeitmittelung geschätzte Störsignalparameter gewonnen werden.

Bei einem Funkkommunikationssystem bzw. bei einem Mobilfunksystem weisen Funkübertragungskanäle sowohl Kurzzeiteigenschaften als auch Langzeiteigenschaften auf, die empfangsseitig sowohl Nutzsignalparameter als auch Störsignalparameter eines Empfangssignals beeinflussen.

Dabei werden die Kurzzeiteigenschaften empfangsseitig typischerweise durch sogenanntes "Fast-Fading" (Interferenzsituations-Änderungen) oder durch im Wellenlängenbereich liegende Bewegungen eines mobilen Teilnehmers beeinflusst, während die Langzeiteigenschaften typischerweise durch Umgebungsänderungen beeinflusst werden, z.B. durch Verschiebungen von Funkausbreitungspfaden, die sich empfangsseitig bezüglich Einfallswinkel oder Verzögerungszeiten oder durch Abschattung verändern.

Um Teilnehmersymbole eines Empfangssignals kohärent detektieren zu können, werden zur Detektion die Kurzzeiteigenschaften als aktuelle Funkübertragungskanaleigenschaften benötigt, die als Kanalimpulsantworten nach Betrag und Phase mit Hilfe von vorbekannten Trainingssymbolen aus dem Empfangssignal abschätzbar sind.

Durch eine kohärente Mittelung wird bei den Kanalimpulsantworten im Vergleich zum Empfangssignal ein erhöhter Signal-Störabstand (SNR) erreicht. Bei der kohärenten Mittelung ist eine Mittelungslänge mit einer Obergrenze vorgegeben, die abhängig von schnell erfolgende Änderungen des Funkübertragungskanals festgelegt wird.
Zusätzlich sind die Trainingssymbole systembedingt in ihrer Anzahl begrenzt. Bei einem theoretisch maximal zu erreichenden Signal-Störabstand kommt es somit ebenfalls zu einer Begrenzung.

Diejenigen Eigenschaften des Funkübertragungskanals, die sich vergleichend zu den Impulsantworten über längere Beobachtungszeiten verändern (Laufzeitverzögerungen, Änderungen des Signal-Störabstands, Änderungen bei zu bestimmenden Kovarianzmatrizen, u.s.w.) werden als Langzeitparameter mit Hilfe einer inkohärenten Langzeitmittelung aus dem Empfangssignal bestimmt. Dadurch ist bei den Langzeitparametern eine deutlich höhere Zuverlässigkeit als bei den Impulsantworten zu erzielen. Die Langzeitparameter wiederum basieren auf den Impulsantworten.
Bei einer Erhöhung der Mittelungslänge wird hier jedoch der Signal-Störabstand SNR bei der Schätzung der Langzeitparameter nicht verbessert, sondern lediglich die Varianz der Langzeitparameter geht gegen null.

Störsignalparameter, die in der Regel mit Hilfe einer inkohärenten Langzeitmittelung aus einem Empfangssignal ermittelt werden, enthalten neben den tatsächlichen Störsignalanteilen noch Nutzsignalanteile und verhalten sich bezüglich ihrer Varianz entsprechend.

Nutzsignalparameter, die in der Regel mit Hilfe einer kohärenten Kurzzeitmittelung und einer inkohärenten Langzeitmittelung aus einem Empfangssignal durch Schätzung ermittelt werden, enthalten neben den tatsächlichen Nutzsignalanteilen noch Störsignalanteile.

Selbst bei einer theoretisch unendlich andauernden Mittelung verbleibt somit ein systematischer Schätzfehler sowohl bei den Nutzsignalparametern als auch bei den Störsignalparametern, die bei praktischen Anwendungen im allgemeinen vernachlässigt werden.

Es ist daher Aufgabe der vorliegenden Erfindung, mit geringem Schätzfehler behaftete Nutz- und Störsignalparameter aus einem Empfangssignal zu gewinnen.

Die Aufgabe der Erfindung wird durch die Merkmale des Anspruchs 1 gelöst. Vorteilhafte Weiterbildungen der Erfindung sind in den Unteransprüchen angegeben.

Durch das erfindungsgemäße Verfahren werden die beschriebenen systematischen Schätzfehler sowohl bei den Nutzsignalparametern als auch bei den Störsignalparametern vollständig kompensiert.

Die Nutzsignalparameter und die Störsignalparameter werden mit Hilfe herkömmlicher Methoden geschätzt und einer erfindungsgemäßen gegenseitigen Kompensation des Schätzfehlers zur Gewinnung von optimierten Nutzsignalparametern bzw. optimierten Störsignalparametern zugeführt.

Alternativ ist es erfindungsgemäß möglich, aus den mit dem systematischen Schätzfehler behafteten geschätzten Nutzsignalparameter bzw. geschätzten Störsignalparameter ein Ergebnis zu gewinnen und den Schätzfehler nachträglich zu kompensieren. Dabei wird vorteilhaft benötigte Rechenkomplexität reduziert.

Besonders bei Anwendungen mit sehr niedrigem Signal-Störabstand (wie beispielsweise bei einem auf Antennensignalen angewendeten Beamforming-Verfahren) werden durch die erfindungsgemäße Kompensation des Schätzfehlers je nach Anwendung beträchtliche Übertragungsverbesserungen erreicht.

Je nach Übertragungs-Szenario hat ein vernachlässigter Schätzfehler starke negative Auswirkungen, die mit Hilfe des erfindungsgemäßen Verfahrens verhindert werden.
Besonders vorteilhaft wird das erfindungsgemäße Verfahren beim sogenannten "DS-CDMA-Funkkommunikationssystem", bei dem Teilnehmersignale mit Hilfe von quasi-orthogonalen Codes übertragen werden, eingesetzt. Hier ist der Nutzsignalanteil beim Empfangssignal gegenüber dem Störsignal sehr klein. Bislang wurden üblicherweise die Störsignalparameter durch Schätzung ermittelt und inklusive Schätzfehler zur Eliminierung eines Störsignalanteils bei den Nutzsignalparametern verwendet. Durch Anwendung des erfindungsgemäßen Verfahrens ist zukünftig dieser Schätzfehler vollständig kompensierbar.

Im Folgenden wird die Erfindung anhand von fünf Anwendungsbeispielen näher erläutert.

Ein erstes Beispiel zeigt eine Anwendung des erfindungsgemäßen Verfahrens bei einer Bestimmung eines Signal-Störabstands SNR.

Im folgenden Beispiel gilt:

S   Nutzsignalleistung als optimierter Nutzsignalparameter,

N   Störsignalleistung als optimierter Störsignalparameter,

S'   Nutzsignalleistung als geschätzter Nutzsignalparameter, und

N'   Störsignalleistung als geschätzter Störsignalparameter.

Der geschätzte Nutzsignalparameter S' bzw. der geschätzte Störsignalparameter N' beinhaltet jeweils einen Anteil des anderen Signalparameters sowie einen zusätzlichen Schätzfehler $\Delta S$ bzw. $\Delta N$, der durch eine nur endlich durchgeführte Langzeitmittelung bedingt wird.
Es gilt somit:

$$S' = S + k*N + \Delta S$$

$$N' = N + g*S + \Delta N$$

Die beiden Faktoren k bzw. g werden als vorbekannt betrachtet.
Der Faktor k ist nur von der kohärenten Mittelungslänge abhängig, nicht jedoch von der endlichen Langzeitmittelungslänge.

Der Faktor k ist beispielsweise indirekt proportional zur kohärenten Kurzzeit-Mittelungslänge (beispielsweise zur Chipanzahl pro Pilotsymbol multipliziert mit der Pilotsymbolanzahl) und direkt proportional zum Leistungsanteil der Trainingssequenz am Gesamtsignal.
Der Faktor k wird mit zunehmender kohärenter Kurzzeit-Mittelungslänge geringer und ist typischerweise erheblich kleiner als Eins. Die Langzeitmittlung verringert die Varianz der Schätzwerte, wodurch $\Delta S$ bzw. $\Delta N$ gegen Null streben.

Für den geschätzten Störsignalparameter N' ist im allgemeinen eine kohärente Mittelung nicht durchführbar.

Der Faktor g ist von einer endlichen Langzeit-Mittelungslänge unabhängig. In den meisten Fällen ist g=1.

Der oben genannte Nutzsignalparameter S' wird mit Hilfe einer kohärenten Kurzzeitmittelung und einer inkohärenten Langzeitmittelung aus einem Empfangssignal geschätzt während mit Hilfe einer inkohärenten Langzeitmittelung aus dem Empfangssignal der Störsignalparameter N' geschätzt wird.

Im folgenden wird zur Vereinfachung eine ideale inkohärente Langzeitmittelung angenommen, d. h. $\Delta S=0$ bzw. $\Delta N=0$.

Nun wird erfindungsgemäß der optimierte Nutzsignalparameter S und der optimierte Störsignalleistung N mit kompensiertem Schätzfehler bestimmt. Mit g=1 ergibt sich:

$$S' = S + k*N$$

$$N' = N + S$$

und aufgelöst:

$$S = \frac{1}{1-k}S' - \frac{k}{1-k}N' \qquad N = \frac{1}{1-k}N' - \frac{k}{1-k}S'$$

Der Signal-Störabstand SNR kann nun mit eliminiertem Schätzfehler ermittelt werden:

$$SNR = S / N.$$

Alternativ dazu kann zuerst ein mit Schätzfehler behafteter Signal-Störabstand SNR' ermittelt werden:

$$SNR' = S' / N'$$

und nachfolgend der Schätzfehler kompensiert werden:

$$SNR' = \frac{S'}{N'} = \frac{SNR+k}{SNR+1}$$

$$SNR = \frac{SNR'-k}{1-SNR'}$$

Ein zweites Beispiel zeigt eine Anwendung des erfindungsgemäßen Verfahrens bei einer Kovarianzmatrix-Schätzung.

Viele Beamforming-Verfahren basieren auf einer sogenannten "Nutzsignal-Kovarianzmatrix" $R_{ss}$ bzw. auf einer sogenannten Störsignal-Kovarianzmatrix $R_{nn}$.

Ähnlich zum ersten Beispiel werden geschätzte Parameter der Nutzsignal-Kovarianzmatrix $R_{ss}'$ mit Hilfe einer kohärenten Kurzzeitmittelung und einer inkohärenten Langzeitmittelung aus einem Empfangssignal gewonnen, während mit Hilfe einer inkohärenten Langzeitmittelung aus dem Empfangssignal geschätzte Parameter einer Störsignalkovarianzmatrix $R_{nn}'$ gewonnen werden.

Im Folgenden gilt:

$R_{ss}$ als optimierte Nutzsignal-Kovarianzmatrix,
$R_{nn}$ als optimierte Störsignal-Kovarianzmatrix,
$R_{ss}'$ als geschätzte Nutzsignal-Kovarianzmatrix, und
$R_{nn}'$ als geschätzte Störsignal-Kovarianzmatrix.

$$R_{ss}' = R_{ss} + k*R_{nn} \qquad R_{nn}' = R_{nn} + R_{ss}$$

Nach Kompensation des Schätzfehlers ergibt sich die optimierte Nutzsignal-Kovarianzmatrix $R_{ss}$ bzw. die optimierte Störsignal-Kovarianzmatrix $R_{nn}$ zu:

$$R_{ss} = \frac{1}{1-k}R_{ss}' - \frac{k}{1-k}R_{nn}' \qquad R_{nn} = \frac{1}{1-k}R_{nn}' - \frac{k}{1-k}R_{ss}'$$

Abhängig vom eingesetzten Verfahren können - verglichen mit Beispiel 1 - wiederum zunächst die fehlerbehafteten geschätzten Matrizen verarbeitet werden und erst nachfolgend die erfindungsgemäße Kompensation durchgeführt werden.

Ein drittes Beispiel zeigt eine Anwendung des erfindungsgemäßen Verfahrens beim sogenannten "Eigen-Beamforming".

Das Eigen-Beamforming-Verfahren basiert auf Eigenwerten und Eigenvektoren der oben genannten Kovarianzmatrizen. Die zugrundegelegte Eigenwert-Gleichung lautet:

$$R_{ss}\vec{w}_i = \lambda_i R_{nn}\vec{w}_i$$

Verwendet man anstelle der korrekten, optimierten Kovarianzmatrizen $R_{ss}$ bzw. $R_{nn}$ die fehlerbehafteten, geschätzten Kovarianzmatrizen $R_{ss}'$ bzw. $R_{nn}'$, so erhält man als Eigenwertgleichung:

$$R_{ss}'\vec{w}_i' = \lambda_i' R_{nn}'\vec{w}_i'$$

Diese Gleichungen ergeben gleichartige Eigenvektoren mit sich unterscheidenden optimierten Eigenwerten $\lambda$ bzw. fehlerbehafteten Eigenwerten $\lambda'$.

Es gilt:

$$\vec{w}_i' = \vec{w}_i \qquad \lambda_i' = \frac{\lambda_i + k}{\lambda_i + 1} \qquad \lambda_i = \frac{\lambda_i' - k}{1 - \lambda_i'}$$

Ein viertes Beispiel zeigt eine Anwendung des erfindungsgemäßen Verfahrens beim sogenannten "Fixed-Beamforming.

Beim Fixed-Beamforming-Verfahren wird aus einer Menge unveränderlicher Strahlungsdiagramme (Beams) beispielsweise anhand des Signal-Störabstands ein Beam oder mehrere Beams ausgewählt. Jeder einzelne Beam i bzw. jedes einzelne Beamsignal lässt sich durch einen Zeilenvektor $\vec{w}_i^H$ darstellen, der jeweils zugeordnete komplexe Antennengewichtsfaktoren enthält.

Sowohl Nutzsignalleistung $S_i$ als auch Störsignalleistung $N_i$ beim i-ten Beam lassen sich in Abhängigkeit von den Kovarianzmatrizen $R_{ss}$ bzw. $R_{nn}$ angeben:

$$S_i = \vec{w}_i^H R_{ss}\vec{w}_i \qquad N_i = \vec{w}_i^H R_{nn}\vec{w}_i$$

Die Verwendung der fehlerbehafteten geschätzten Kovarianzmatrizen führt zu den fehlerbehafteten Leistungen:

$$S_i' = \vec{w}_i^H R_{ss}'\vec{w}_i \qquad N_i' = \vec{w}_i^H R_{nn}'\,\vec{w}_i$$

Wie im ersten Beispiel lautet das Kompensationsschema für die zugehörigen optimierten Signal-Störabstände SNR bzw. für die fehlerbehafteten Signal-Störabstände SNR :

$$SNR_i = \frac{SNR_i' - k}{1 - SNR_i'} = \frac{S_i}{N_i} \qquad SNR_i' = \frac{SNR_i + k}{SNR_i + 1} = \frac{S_i'}{N_i'}$$

Ein fünftes Beispiel zeigt eine Anwendung des erfindungsgemäßen Verfahrens beim sogenannten "Hybriden-Beamforming".

Beim Hybriden-Beamforming ist in einer ersten Stufe ein sogenannter Fixed-Beamformer enthalten. Die Kompensation des Schätzfehlers wird wie oben beschrieben durchgeführt. Der ersten Stufe ist eine zweite Stufe nachgeschaltet und beinhaltet einen Eigen-Beamformer, der nun auf den entsprechenden Beamsignalen arbeitet. Die Kompensation der Eigenwerte ist davon nicht betroffen.

Bei den oben beschriebenen Beamforming-Verfahren entstehen besonders dann erhebliche Gewinne durch die jeweiligen Kompensationen, wenn die Störsignal-Kovarianzmatrix (als Interferenz- bzw. Noise-Kovarianzmatrix) keine Einheitsmatrix ist. Dies ist der Fall, wenn räumlich gerichtete Störungen vorliegen.

Dann erreicht ein Störsignal relativ leicht die Größenordnung des eigentlichen Nutzsignals, wodurch die Auswahl von geeigneten Beams für den Empfang bzw. für eine Störsignalunterdrückung erheblich gestört wird.

Durch die im zweiten bis fünften Beispiel dargestellten Kompensationsschemata wird dieser Nachteil überwunden.

**Patentansprüche**

1. Verfahren zur Ermittlung von Nutzsignalparametern und Störsignalparametern aus einem Empfangssignal eines Funkkommunikationssystems

   - bei dem aus dem Empfangssignal einerseits anhand einer kohärenten Kurzzeitmittelung und einer inkohärenten Langzeitmittelung Nutzsignalparameter und andererseits anhand einer inkohärenten Langzeitmittelung Störsignalparameter durch Schätzung gewonnen werden,
   - bei dem aus den geschätzten Nutzsignalparametern und aus den geschätzten Störsignalparametern optimierte Nutzsignalparameter und optimierte Störsignalparameter mit jeweils kompensiertem Schätzfehler gewonnen werden.

2. Verfahren nach Anspruch 1, bei dem eine optimierte Nutzsignalleistung S als Nutzsignalparameter und eine optimierte Störsignalleistung N als Störsignalparameter N bestimmt werden durch:

$$S = \frac{1}{1-k}S' - \frac{k}{1-k}N' \qquad N = \frac{1}{1-k}N' - \frac{k}{1-k}S'$$

mit k als Rauschunterdrückungsfaktor, mit S' als geschätzter Nutzsignalleistung und mit N' als geschätzter Störsignalleistung.

3. Verfahren nach Anspruch 2, bei dem ein schätzfehlerkompensierter Signal-Störabstand SNR bestimmt wird durch:

$$SNR = \frac{SNR'-k}{1-SNR'} = \frac{S}{N}$$

mit SNR'= S'/ R' als schätzfehlerbehaftetem Signal-Störabstand.

4. Verfahren nach Anspruch 1, bei dem bei einer Kovarianzmatrix-Schätzung Parameter einer optimierten Nutzsignal-Kovarianzmatrix $R_{ss}$ und einer optimierten Störsignal-Kovarianzmatrix $R_{nn}$ bestimmt werden durch:

$$R_{ss} = \frac{1}{1-k}R_{ss}' - \frac{k}{1-k}R_{nn}'$$

$$R_{nn} = \frac{1}{1-k}R_{nn}' - \frac{k}{1-k}R_{ss}'$$

mit $R_{ss}'$ als Nutzsignal-Kovarianzmatrix mit geschätzten Nutzsignalparametern, mit $R_{nn}'$ als Störsignal-Kovarianzmatrix mit geschätzten Störsignalparametern, mit $R_{ss}$ als Nutzsignal-Kovarianzmatrix mit optimierten Nutzsignalparametern und mit $R_{nn}$ als Störsignal-Kovarianz-matrix mit optimierten Störsignalparametern.

5. Verfahren nach Anspruch 4, bei dem bei einem Eigen-Beamforming-Verfahren optimierte Eigenwerte $\lambda_i$ bestimmt werden durch:

$$R_{ss}\vec{w}_i = \lambda_i R_{nn}\vec{w}_i$$

$$R_{ss}'\vec{w}_i' = \lambda_i' R_{nn}'\vec{w}_i'$$

mit $W_i' = w_i$ als Eigenvektoren,
und bei dem optimierte Eigenwerte $\lambda_i$ bzw. geschätzte Eigenwerte $\lambda_i'$ bestimmt werden durch:

$$\lambda_i = \frac{\lambda_i'-k}{1-\lambda_i'} \qquad \lambda_i' = \frac{\lambda_i+k}{\lambda_i+1}$$

6. Verfahren nach Anspruch 4, bei dem bei einem Fixed-Beamforming-Verfahren eine optimierte Nutzsignalleistung $S_i$ und eine optimierte Störsignalleistung $N_i$ eines i-ten Beams bestimmt werden durch:

$$S_i'= \vec{w}_i^H R_{ss}' \, \vec{w}_i \qquad N_i'= \vec{w}_i^H R_{nn}'\vec{w}_i$$

$$S_i = \vec{w}_i^H R_{ss} \, \vec{w}_i \qquad N_i = \vec{w}_i^H R_{nn} \, \vec{w}_i$$

mit $S_i'$ als geschätzte Nutzsignalleistung und mit $N_i'$ als geschätzte Störsignalleistung.

7. Verfahren nach Anspruch 6, bei dem ein i-ter optimierter Signal-Störabstand SNR bestimmt wird durch:

$$SNR_i = \frac{SNR_i'-k}{1-SNR_i'} = \frac{S_i}{N_i}$$

mit

$$SNR_i' = \frac{SNR_i+k}{1+SNR_i} = \frac{S_i'}{N_i'}$$

als schätzfehlerbehaftetem Signal-Störabstand.

**Europäisches Patentamt**

# EUROPÄISCHER RECHERCHENBERICHT

Nummer der Anmeldung

EP 02 01 4373

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | CHAUFRAY J-M ET AL: "Consistent estimation of Rayleigh fading channel second-order statistics in the context of the wideband CDMA mode of the UMTS" IEEE TRANSACTIONS ON SIGNAL PROCESSING, IEEE, INC. NEW YORK, US, Bd. 49, Nr. 12, Dezember 2001 (2001-12), Seiten 3055-3064, XP002200959 ISSN: 1053-587X * Seite 3055, rechte Spalte * * Seite 3057, rechte Spalte - Seite 3058, rechte Spalte * | 1 | H04L25/02 H04B7/08 |
| A | | 2-7 | |
| A | US 6 118 832 A (VILA PIERRE ET AL) 12. September 2000 (2000-09-12) * Zusammenfassung * * Spalte 8, Zeile 5 - Spalte 9, Zeile 5 * | 1-7 | |
| T | VIERING I ET AL: "Improving Uplink Adaptive Antenna Algorithms for WCDMA by Covariance Matrix Compensation" VTC 2002 FALL. IEEE VTS 56TH. VEHICULAR TECHNOLOGY CONFERENCE. VANCOUVER, CANADA, SEPTEMBER 24 - 28, 2002, IEEE VEHICULAR TECHNOLOGY CONFERENCE, NEW YORK, NY: IEEE, US, Bd. 4, 24. - 28. September 2002, Seiten 2159-2153, XP002219059 * das ganze Dokument * | 1-7 | RECHERCHIERTE SACHGEBIETE (Int.Cl.7) H04L H04B H01Q |

Der vorliegende Recherchenbericht wurde für alle Patentansprüche erstellt

| Recherchenort | Abschlußdatum der Recherche | Prüfer |
|---|---|---|
| MÜNCHEN | 8. November 2002 | Baltersee, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 01 4373

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2002

| Im Recherchenbericht angeführtes Patentdokument | Datum der Veröffentlichung | Mitglied(er) der Patentfamilie | Datum der Veröffentlichung |
|---|---|---|---|
| US 6118832 A | 12-09-2000 | FR 2758926 A1<br>EP 0858181 A1 | 31-07-1998<br>12-08-1998 |

EPO FORM P0461

Für nähere Einzelheiten zu diesem Anhang : siehe Amtsblatt des Europäischen Patentamts, Nr.12/82